# EUROPEAN PATENT SPECIFICATION

(11) **EP 2 692 581 B1**
(45) Date of publication and mention of the grant of the patent: **20.05.2015**
(21) Application number: 13178639.4
(22) Date of filing: 30.07.2013
(51) Int. Cl.: B60P 1/02, B60P 3/06, B60P 3/40

(54) **Tyred vehicle for carrying excavator machines**
Fahrzeug für den Transport von Baggerfahrzeugen
Véhicule pour le transport machines pelle

(30) Priority: 30.07.2012 IT TO20120676
(43) Date of publication of application: 05.02.2014
(73) Proprietor: Industrie Cometto S.p.A., 12011 Borgo San Dalmazzo (IT)
(72) Inventor: Terzuolo, Pierluigi, 12100 Cuneo (IT); Lippi, Fabrizio, 12010 Vignolo (IT)
(74) Representative: Boggio, Luigi

(56) References cited:
- EP-A1- 2 327 655
- DE-A1-102009 002 824
- DE-A1-102009 041 107
- US-A1- 2007 264 110
- US-A1- 2009 280 000

## Description

The present invention relates to a tyred vehicle for carrying excavator machines and, in particular, large sized excavator machines.

For carrying large sized excavator machines, for example those operating in mines, it is necessary to have loading platforms having lengths even higher than ten meters and widths of seven meters and even more.

To date for carrying said excavator machines, for example to and from a maintenance station which can also be various kilometers far from the work area, trailers towed by tractors are used which are detached from the trailer during the loading and unloading of excavator machines.

The known trailers have a single row of wheels arranged at a longitudinal end of the trailer, a loading ramp and a hooking member arranged at the opposite longitudinal end of the trailer. The tractor comprises a lifting and towing arm that maintains the platform horizontal during carrying and lowers the ramp and the platform to the ground prior to being unhooked from the trailer to allow the ascent and descent of the excavator machine.

Although used, the known trailers of the type described above are barely satisfactory, mainly for the fact that during the loading and unloading operations the platform is tilted, therefore the slipping and tilting of the excavator machine is not uncommon especially during unloading when the excavator machine must necessarily reverse.

The tamped ground surface on which the operations of loading and unloading are performed, does not ensure, because of its natural state and especially in case of rain, static lift and stability against rolling of the trailer.

The alternative of providing a trailer with a horizontal platform raised from the ground and a movable hydraulic ramp of access to the platform itself has been practically unusable due to the extreme weight of the excavator machines, up to a thousand tons, generating extremely high stresses on the wheels and on the suspension next to the jointing ramp-platform area especially during the crossing of the machine of said jointing area and a general instability of the trailer.

In addition, the inevitable sizes of known trailers generate problems both from a manufacturing point of view and regarding their transfer to the areas of use.
System devices for transporting large size object are disclosed for example in US 2007/0264110 A1 and in EP 2 327 655 A1.
Purpose of the present invention is to provide a tyred vehicle for carrying excavator machines, which allows to solve the above problems in a simple and economic way, and resulting, at the same time, easily and safely usable, as well as being highly efficient and functionally reliable.
According to the present invention, a tyred vehicle for carrying excavator machines, as claimed in claim 1 is obtained.
The invention will now be described with reference to the accompanying drawings, which illustrate a non-limiting embodiment, wherein:
Figure 1 is a schematic perspective view, substantially, in blocks of a preferred embodiment of the tyred vehicle obtained according to the teachings of the present invention;
Figure 2 is an exploded perspective view of the vehicle of Figure 1; and
Figures 3 and 4 illustrate, in side elevation, with parts removed for clarity, the tyred vehicle of Figures 1 and 2 arranged in a carrying condition and, respectively, in a loading/unloading condition of the excavator machine.

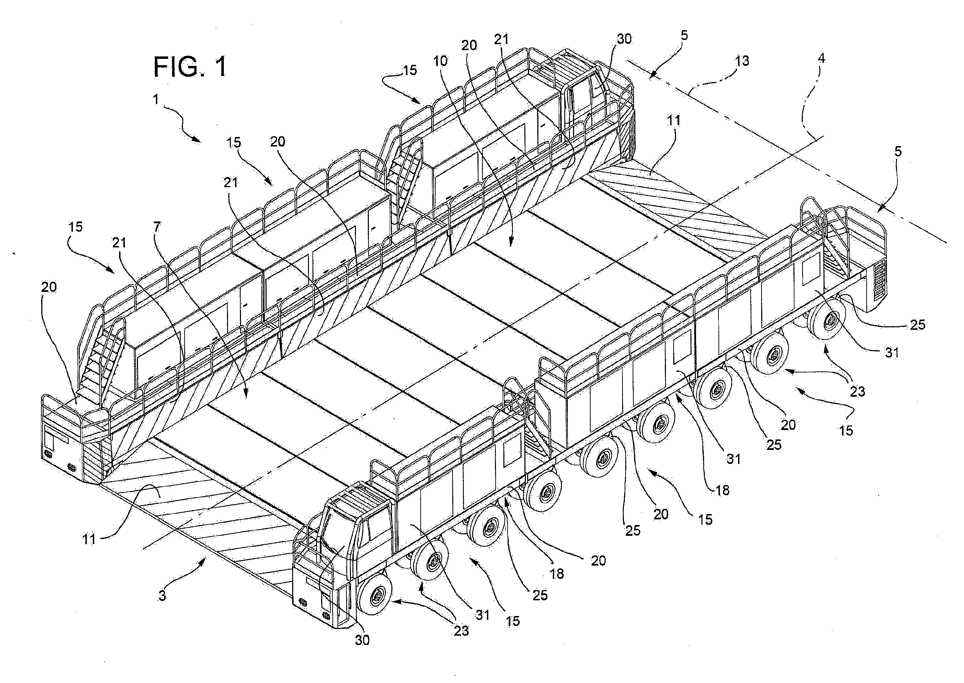

In figure 1, with 1 is indicated, as a whole, a tyred vehicle for carrying large sized and high weight excavator machines. Specifically, the vehicle 1 is applied in carrying to and from work areas earthwork excavator machines 2 having a weight of up to a thousand tons and comprises an intermediate loading platform 3 extending in an advancement longitudinal direction 4 of the vehicle 1 and two motorized and steering tyred wheels assemblies 5 parallel to each other and to the direction 4 and arranged on opposite lateral parts of the loading platform 3 and stably connected to the platform 3 itself in a releasable manner conveniently by means of screws and relative positioning devices, known per se and not illustrated.

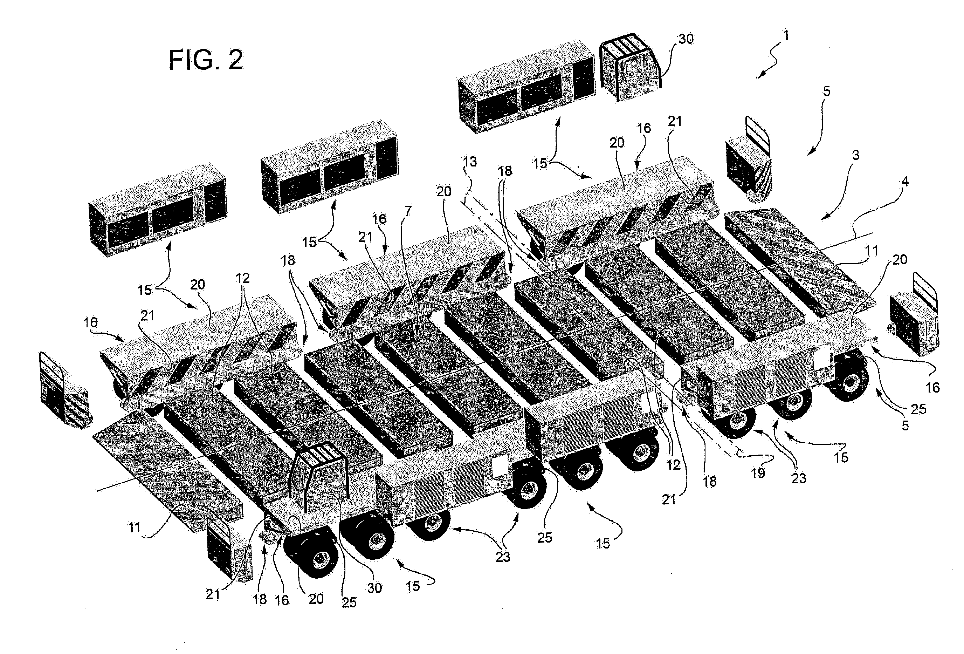

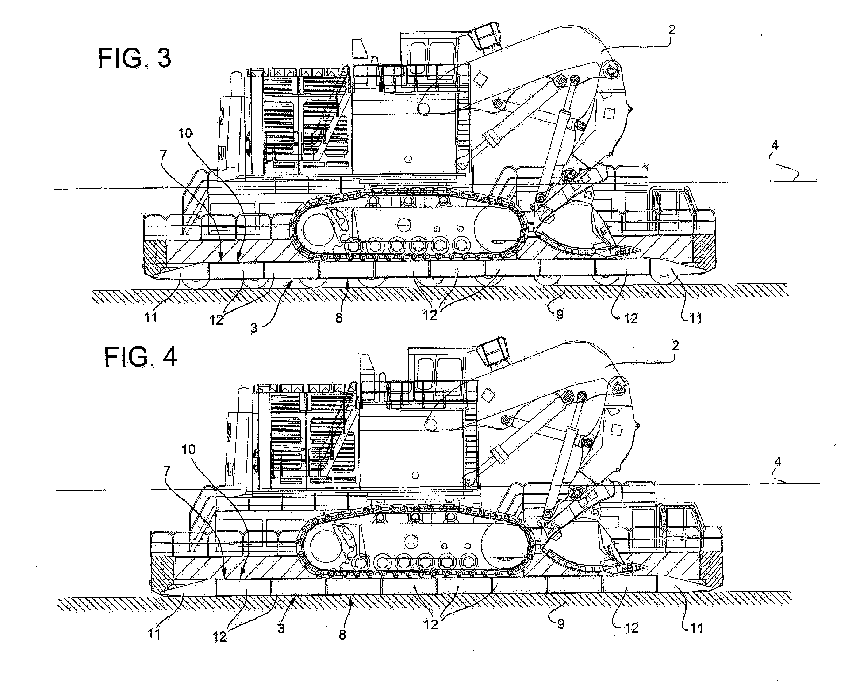

With specific reference to Figure 2, the platform 3 is a modular platform defined on the top by a surface 7 and at the bottom by a surface 8 for resting on the substantially flat ground and adapted to contact a road surface or ground surface 9 (Figure 4) during the operations of loading/unloading.

The platform 3 has a flat loading floor 10 and two fixed ramps 11 identical one to the other of access to the loading floor 10 and arranged on longitudinal opposite sides of the loading floor 10 itself.

The loading floor 10 comprises, in turn, a plurality of portions or intermediate blocks 12 geometrically identical to each other, which have, in plan, a rectangular shape extending in a transverse direction 13 orthogonal to the longitudinal direction 4, are aligned side by side and firmly connected to each other and to the ramps 11 in a releasable manner by means of screws and/or other positioning devices, known per se and not visible in the accompanying figures to define a loading floor that is continuous i.e. with no openings.

Again with reference to Figures 1 and 2, the tyred assemblies 5 are identical and rotated by 180° one with respect to the other about a vertical axis orthogonal to the loading floor 10.

Each assembly 5 is also a modular assembly and comprises a plurality of blocks 15 distinct one with respect to the other and aligned in the longitudinal direction 4. Each block 15 comprises a respective frame 16, which extends in the longitudinal direction, is stably connected to respective blocks 12 in a releasable manner and to a frame 16 adjacent thereto always in a releasable manner. Conveniently, two adjacent frames 16 are connected one to the other by a hinge joint 18 having a hinge axis 19 orthogonal to the longitudinal direction 4 and by way of screw devices, known per se and not visible in the attached figures.

Each frame 16 has, in cross section, a reversed L shape and comprises a flat upper wall 20 parallel to the loading floor 10 and raised with respect to the loading floor 10 itself and a vertical side wall 21 connected to the loading floor 10 in a releasable manner and extending upwardly from the loading floor 10 itself to define, together with the other vertical side walls 21, an abutment or longitudinal shoulder for maintaining the excavator machine 2 on the loading floor 10.

In each frame 16, in the outer compartment delimited by the respective walls 20 and 21 a plurality of motorized tyred axles 23 is housed, known per se and not described in detail arranged aligned with each other in the longitudinal direction 4 or transversely shifted or staggered one with respect to the other in the transverse direction 13.

Each tyred axle 23 is coupled to the respective frame 16 by a respective hydraulic suspension 25, for example of the compass type or known as "Dual Link" transmission, which is adjustable to vary the height from the ground of the respective frame 16 and, specifically, to vertically move the platform 3 parallel to itself between two end of stroke extreme positions, of which a raised one for carrying, shown in Figure 3 and a lowered one for loading/unloading, shown in Figure 4.

When arranged in its lowered loading position, the lower surface 8 of the platform 3 is all arranged in contact with the ground and the ramps 11, these latter also completely rest on the ground allowing the loading of the machine 2 on, or the unloading of the machine 2 itself from, the loading floor 10 without generating particular overloads neither on the platform 3, nor on the frames 16, nor on the suspensions 25 nor on one or more pairs of axles and respective wheels.

Furthermore with reference to Figures 1 and 2, one of the two blocks 15 of longitudinal ends of each of the tyred assemblies 5 comprises a driving cab 30 resting on the upper wall 20, while all the blocks 15 carry resting on the respective upper wall 20 a respective service block 31 which comprises the necessary hydraulic power devices for driving and braking, the necessary tanks and the respective pumping and cooling device of the operating fluids provided on board the vehicle 1 and in general all that is needed for the propulsion and control of the vehicle 1.

From the foregoing it is evident as all the constructive characteristics of the vehicle 1 described ensure absolute stability of the loading floor during the loading and unloading steps of the machine since the whole loading platform rests directly on the ground, i.e. on the rolling plane of the wheels of the tyred axles, as can be seen in Figure 4. The lateral axles are unloaded or rest on the ground to further enhance the rolling stability of the vehicle 1.

Since the platform 3 is provided with two opposing or longitudinal end ramps, the excavator machine 2 can be loaded on one side and unloaded from the other side of the vehicle 1 without the need to proceed in reverse, and this considerably facilitates the loading or the unloading step of the machine. Therefore, since the ramps 11 are fixed with respect to the loading floor all the problems arising from the use, in the known solutions, of movable hydraulically operated ramps and overloads on suspension and/or frames are solved.

During the carrying step, the lateral shoulders retain the excavator machine 2 on the loading floor without any possibility of transverse displacements, for example when traveling around curves or during maneuvers, while during the loading and unloading steps perform a guide function.

The fact of obtaining the loading platform distinct and coupled in a releasable manner to the driving wheel assembly and the same driving assembly divided in two parts independent one from the other allows to divide the machine in independent blocks individually displaceable and therefore obtaining easy transport.

The carrying of the machine is then made enormously easier by the fact that both the loading platform and each of the tyred wheel assemblies are longitudinally divided to form a plurality of modules or blocks dimensionally equal to each other, aligned side by side in the longitudinal direction and each connected to an adjacent module thereof in a releasable manner. In the particular example described, the carrying is further facilitated by the fact that to each of the tyred wheel assemblies 15 three of the blocks 12 of the loading floor are associated.

Besides this, the blocks 15 constituting the longitudinal assemblies, for the fact of defining a resting surface elevated with respect to the loading floor 10 allow to elevate all the driving and control parts of the vehicle making the same easily accessible in case of maintenance or failure and protected from dust, mud and, in general, from any other element present in the area where the excavator machine works or stops waiting to be loaded.

Furthermore, the tyred axles are protected and the same tyred axles result to be easily accessible from the outside for control or replacement in case of punctures.

From the foregoing it appears evident that the vehicle 1 described can be subject to modifications and variations without departing from the protective scope defined by the independent claim. In particular, the various portions or blocks both of the loading floor, and of the tyred assemblies may have geometries or shapes or subdivisions different from those indicated by way of example, as well as can be connected together in a way different from that indicated.

Finally, one among the loading platform and the tyred axle assemblies may not be modular. Conveniently, each of the tyred assemblies may, in fact, comprise an extending timber-framed or continuous box-shaped frame and therefore can be carried as a common beam.

## Claims

1. A tyred vehicle (1) for carrying excavator machines (2), the vehicle (1) comprising a loading platform (3) extending in a longitudinal direction (4) and two motorized tyred axle assemblies (5) extending in parallel directions to said longitudinal direction (4) and arranged on opposite lateral parts of said loading platform (3), said tyred axle assemblies (5) being separate and independent of each other; first releasable connection means being interposed between said loading platform and each of said tyred axle assemblies (5); each of said tyred axle assemblies (5) comprising a respective frame protruding upwards from said loading platform (3) and respective height-adjustable suspension means (25) for moving the loading platform (3) parallel to itself between a raised carrying position and a lowered position for loading/unloading said excavator machine, **characterized in that** at least one of said loading platform (3) and said tyred axle assemblies (5) are divided into respective independent blocks extending (12);(15) to define a continuous loading surface and, respectively, a respective said tyred axle assemblies (5); releasable connection means (18) being interposed between said two consecutive blocks.

2. The vehicle according to claim 1, **characterized in that** the loading platform is a modular platformdivided in the longitudinal direction (4) into a plurality of first independent blocks (12) extending in a direction orthogonal to said longitudinal direction (4) and arranged in contact with one another to define a continuous loading surface; first releasable connection means being interposed between two consecutive first blocks.

3. The vehicle according to claim 1 or 2, **characterized in that** each of said tyred axle assemblies (5) is a modular assembly divided in the longitudinal direction (4) into a plurality of second independent blocks (15) extending in the longitudinal direction (4) and arranged in contact with one another to define a lateral retention shoulder of said machine on said loading platform, second releasable connection means (18) being interposed between two consecutive second blocks (15).

4. The vehicle according to claim 2 and 3, **characterized in that** each of said second blocks (15) carries a plurality of said first blocks (12) coupled in a releasable manner.

5. The vehicle according to claim 3 or 4, **characterized in that** each of said second blocks (15) comprises its own frame defining a loading surface parallel to and raised from said loading platform and actuating means of the corresponding said second block (15) resting on said loading surface.

6. The vehicle according to one of claims 3 to 5, **characterized in that** one of said second blocks (15) comprises a vehicle driving cab (30); said driving cab resting on a respective loading surface raised with respect to said loading platform (3).

7. The vehicle according to any preceding claims, **characterized in that** each of said tyred axle assemblies comprises a respective driving cab (30).

8. The vehicle according to any of claims 5 to 7, **characterized in that** each said frame has a reverse L shape.

9. The vehicle according to any preceding claims **characterized in that** said two tyred axle assemblies (5) are identical to each other and rotated by 180° about a vertical axis orthogonal to said loading platform (3).

10. The vehicle according to claim 1, **characterized in that** said loading platform when arranged in said lowered position for loading/unloading completely rests on the rolling surface of the wheels of said tyred axles.

11. The vehicle according to claim 1, **characterized in that** said loading platform (3) comprises two fixed longitudinal end ramps (11) opposed to each other and a continuous intermediate loading floor integrally connected to said ramps (11).

## Patentansprüche

1. Bereiftes Fahrzeug (1) zum Befördern von Baggermaschinen (2), wobei das Fahrzeug (1) eine Lastplattform (3), die sich in einer Längsrichtung (4) erstreckt, und zwei motorisierte bereifte Achsenanordnungen (5), die sich in zu der Längsrichtung (4) parallelen Richtungen erstrecken und auf gegenüberliegenden seitlichen Teilen der Lastplattform (3) angeordnet sind, umfasst, wobei die bereiften Achsenanordnungen (5) getrennt und unabhängig voreinander sind; wobei erste lösbare Verbindungsmittel zwischen der Lastpfattform und jeder der bereiften Achsenanordnungen (5) eingefügt sind; wobei jede der bereiften Achsenanordnungen (5) einen jeweilige Rahmen, der von der Lastplattform (3) nach oben vorsteht, und jeweilige höhenanpassbare Lagerungsmittel (25), um die Lastplattform (3) parallel zu sich selbst zwischen einer erhöhten Beförderungsposition und einer gesenkten Position zum Laden/Entladen der Baggermaschine zu bewegen, umfasst, **dadurch gekennzeichnet, dass** die Lastplattform (3) und/oder die bereiften Achsenanordnungen (5) in jeweilige unabhängig Blöcke unterteilt sind, die sich erstrecken (12); (15), um eine durchgängige Ladefläche bzw. eine jeweilige bereifte Achsenanordnung (5) zu definieren; wobei lösbare Verbindungsmittel (18) zwischen den beiden aufeinanderfolgenden Blöcken eingefügt sind.

2. Fahrzeug nach Anspruch 1, **dadurch gekennzeichnet, dass** die Lastplattform eine modulare Plattform ist, die in der Längsrichtung (4) in mehrere erste unabhängige Blöcke (12) unterteilt ist, die sich in eine Richtung senkrecht zu der Längsrichtung (4) erstrecken und in Kontakt miteinander angeordnet sind, um eine durchgängige Ladefläche zu definieren; wobei erste lösbare Verbindungsmittel zwischen zwei aufeinanderfolgenden ersten Blöcken angeordnet sind.

3. Fahrzeug nach Anspruch 1 oder 2, **dadurch gekennzeichnet, dass** jede der bereiften Achsenanordnungen (5) eine modulare Anordnung ist, die in der Längsrichtung (4) in mehrere zweite unabhängige Blöcke (15) unterteilt ist, die sich in der Längsrichtung (4) erstrecken und in Kontakt miteinander angeordnet sind, um eine seitliche Halteschulter der Maschine auf der Lastplattform zu definieren, wobei zweite lösbare Verbindungsmittel (18) zwischen zwei aufeinanderfolgenden zweiten Blöcken (15) eingefügt sind.

4. Fahrzeug nach Anspruch 2 und 3, **dadurch gekennzeichnet, dass** jeder der zweiten Blöcke (15) mehrere der ersten Blöcke (12) trägt, die in einer lösbaren Weise gekoppelt sind.

5. Fahrzeug nach Anspruch 3 oder 4, **dadurch gekennzeichnet, dass** jeder der zweiten Blöcke (15) seinen eigenen Rahmen, der eine Ladefläche parallel zu der Lastplattform und von dieser erhöht definiert, und Betätigungsmittel des entsprechenden zweiten Blocks (15), der auf der Ladefläche ruht, umfasst.

6. Fahrzeug nach einem der Ansprüche 3 bis 5, **dadurch gekennzeichnet, dass** einer der zweiten Blöcke (15) eine Fahrzeugführerkabine (30) umfasst; wobei die Führerkabine auf einer entsprechenden Ladefläche ruht, die in Bezug auf die Lastpfattform (3) erhöht ist.

7. Fahrzeug nach einem der vorhergehenden Ansprüche, **dadurch gekennzeichnet, dass** jede der bereiften Achsenanordnungen eine entsprechende Führerkabine (30) umfasst.

8. Fahrzeug nach einem der Ansprüche 5 bis 7, **dadurch gekennzeichnet, dass** jeder Rahmen eine umgekehrte L-Form aufweist.

9. Fahrzeug nach einem der vorhergehenden Ansprüche, **dadurch gekennzeichnet, dass** die beiden bereiften Achsenanordnungen (5) zueinander identisch sind und um 180° um eine vertikale Achse senkreicht zu der Lastplattform (3) gedreht sind.

10. Fahrzeug nach Anspruch 1, **dadurch gekennzeichnet, dass** die Lastplattform dann, wenn sie in der gesenkten Position für das Laden/Entladen angeordnet ist, vollständig auf der Rollfläche der Räder der bereiften Achsen ruht.

11. Fahrzeug nach Anspruch 1, **dadurch gekennzeichnet, dass** die Lastplattform (3) zwei feste Längsendrampen (11), die einander gegenüberliegen, und einen durchgängigen Zwischenladeboden, der mit den Rampen (11) einteilig verbunden ist, umfasst.

## Revendications

1. Véhicule à pneumatiques (1) pour transporter des machines excavatrices (2), le véhicule (1) comprenant une plateforme de chargement (3) s'étendant dans une direction longitudinale (4) et deux ensembles essieux à pneumatiques motorisés (5) s'étendant dans des directions parallèles à ladite direction longitudinale (4) et agencés sur des parties latérales opposées de ladite plateforme de chargement (3), lesdits ensembles essieux à pneumatiques (5) étant distincts et indépendants l'un de l'autre ; des premiers moyens de connexion amovibles étant intercalés entre ladite plateforme de chargement et chacun desdits ensembles essieux à pneumatiques (5) ; chacun desdits ensembles essieux à pneumatiques (5) comprenant un châssis respectif faisant saillie vers le haut depuis ladite plateforme de chargement (3) et des moyens de suspension réglables en hauteur respectifs (25) pour déplacer la plateforme de chargement (3) parallèlement à elle-même entre une position de transport levée et une position abaissée pour charger/décharger ladite machine excavatrice, **caractérisé en ce qu'**au moins un des éléments parmi la plateforme de chargement (3) et lesdits ensembles essieux à pneumatiques (5) est divisé en blocs indépendants respectifs (12 ; 15) s'étendant de manière à définir une surface de chargement continue et, respectivement, un desdits ensembles essieux à pneumatiques (5) respectif ; des moyens de connexion amovibles (18) étant intercalés entre deux dits blocs consécutifs.

2. Véhicule selon la revendication 1, **caractérisé en ce que** la plateforme de chargement est une plateforme modulaire divisée dans la direction longitudinale (4) en une pluralité de premiers blocs indépendants (12) s'étendant dans une direction perpendiculaire à ladite direction longitudinale (4) et agencés en contact les uns avec les autres de manière à définir une surface de chargement continue ; des premiers moyens de connexion amovibles étant intercalés entre deux premiers blocs consécutifs.

3. Véhicule selon la revendication 1 ou 2, **caractérisé en ce que** chacun desdits ensembles essieux à pneumatiques (5) est un ensemble modulaire divisé dans la direction longitudinale (4) en une pluralité de seconds blocs indépendants (15) s'étendant dans la direction longitudinale (4) et agencés en contact les uns avec les autres de manière à définir un épaulement de retenue latéral de ladite machine sur ladite plateforme de chargement, des seconds moyens de connexion amovibles (18) étant intercalés entre deux seconds blocs consécutifs (15).

4. Véhicule selon la revendication 2 et 3, **caractérisé en ce que** chacun desdits seconds blocs (15) supporte une pluralité desdits premiers blocs (12) accouplés de manière amovible.

5. Véhicule selon la revendication 3 ou 4, **caractérisé en ce que** chacun desdits seconds blocs (15) comprend son propre châssis définissant une surface de chargement parallèle, et levée, relativement à ladite plateforme de chargement et des moyens d'actionnement dudit second bloc correspondant (15) reposant sur ladite surface de chargement.

6. Véhicule selon l'une quelconque des revendications 3 à 5, **caractérisé en ce que** l'un desdits seconds blocs (15) comprend une cabine conducteur de véhicule (30) ; ladite cabine conducteur reposant sur une surface de chargement respective levée par rapport à ladite plateforme de chargement (3).

7. Véhicule selon l'une quelconque des revendications précédentes, **caractérisé en ce que** chacun desdits ensembles essieux à pneumatiques comprend une cabine conducteur (30) respective.

8. Véhicule selon l'une quelconque des revendications 5 à 7, **caractérisé en ce que** chaque dit châssis a la forme d'un L inversé.

9. Véhicule selon l'une quelconque des revendications précédentes, **caractérisé en ce que** lesdits deux ensembles essieux à pneumatiques (5) sont identiques et tournés de 180° autour d'un axe vertical perpendiculaire à ladite plateforme de chargement (3).

10. Véhicule selon la revendication 1, **caractérisé en ce que** ladite plateforme de chargement, lorsque agencée dans ladite position abaissée pour chargement/ déchargement repose complètement sur la surface de roulement des roues desdits essieux à pneumatiques.

11. Véhicule selon la revendication 1, **caractérisé en ce que** ladite plateforme de chargement (3) comprend deux rampes d'extrémités longitudinales fixes (11) opposées l'une à l'autre et un plancher de chargement intermédiaire continu relié d'un seul tenant auxdites rampes (11).
